Europäisches Patentamt

European Patent Office

Office européen des brevets

(19)

(11) Publication number: **0 335 653 B1**

(12) **EUROPEAN PATENT SPECIFICATION**

(45) Date of publication of patent specification: **18.08.93**  (51) Int. Cl.5: **C09K 17/00**

(21) Application number: **89303037.9**

(22) Date of filing: **28.03.89**

(54) **Method for the preparation of gels capable of taking up and releasing water in a reversible manner from clay minerals and polymers.**

(30) Priority: **28.03.88 HU 153688**
**28.03.88 HU 153788**
**28.03.88 HU 153888**

(43) Date of publication of application:
**04.10.89 Bulletin 89/40**

(45) Publication of the grant of the patent:
**18.08.93 Bulletin 93/33**

(84) Designated Contracting States:
**AT BE CH DE ES FR GB GR IT LI LU NL SE**

(56) References cited:
**EP-A- 0 072 213**
**EP-A- 0 244 981**
**US-A- 4 242 140**
**US-A- 4 600 744**

(73) Proprietor: **ALTALANOS IPARFEJLESZTESI**
**Tavasz u. 3.**
**H-1033 Budapest(HU)**

(72) Inventor: **Libor, Oszkár**
**Budenz u. 4/a**
**H-1021 Budapest(HU)**
Inventor: **Nagy, Gábor**
**Szakasits A. u. 32/b**
**H-1119 Budapest(HU)**
Inventor: **Székely, Tamás**
**Balogh Adám u. 7/a**
**H-1026 Budapest(HU)**
Inventor: **Barkács, Katalin**
**Szamos u. 6**
**H-1122 Budapest(HU)**
Inventor: **Fodor, Gyula**
**Zsolt u. 9**
**H-1016 Budapest(HU)**
Inventor: **Gál, Arpád**
**Nápoly u. 113**
**H-1171 Budapest(HU)**

(74) Representative: **Hedley, Nicholas James Matthew et al**
**Stephenson Harwood One, St. Paul's Churchyard**
**London EC4M 8SH (GB)**

Rank Xerox (UK) Business Services
(3.10/3.6/3.3.1)

EP 0 335 653 B1

## Description

The invention relates to an improved method for the preparation of gels with stable structure, capable of taking up and releasing water in a reversible manner, from clay minerals and polymers.

It is known from Hungarian patents Nos. 186,325 and 189,280 that when a thixotropic swellable smectite of three-layer structure and/or a swellable chain silicate is reacted in activated state or during activation with a water soluble polymer capable of reacting with said clay mineral, stable chemical bonds are formed between the clay mineral and the polymer. The clay mineral, which is disintegrated mainly to its elementary lamellae or chains during activation, forms chemical bonds with the polymer on its reactive sites, whereupon the elementary lamellae or chains of the clay mineral "get stringed" on the polymer, and a stable gel structure is formed. This gel, unlike the starting clay mineral, is no longer thixotropic and does not peptize upon the effect of water, but when contacted with water it swells easily and takes up and releases water in a reversible manner. Such gels can be applied to advantage in the production of watertight layers, furthermore to improve the water household of soils.

As mentioned in the cited references, in order to obtain a stable, irreversibly fixed gel structure capable of taking up and releasing water in a reversible manner, it is of crucial importance that the clay mineral should be reacted with the polymer in activated state or during activation. Otherwise, i.e. when a cluster-like clay mineral incompletely disintegrated to elementary lamellae or chains is applied as starting substance, the clay mineral packages react with the polymer only on their surface and enter a loose sorption interaction with the polymer, but only a very few chemical bonds are formed, if any. When a non-activated clay mineral is reacted with a water-soluble polymer, a product consisting of inorganic and organic macromolecules is formed, the structure and gelling properties of which are determined primarily by the given characteristics of the inorganic component (i.e. the clay mineral), the organic component only modifying these properties to a greater or lesser extent. As an example, when a thixotropic, swelling clay mineral of three-layer structure is reacted in non-activated state with the polymer, the resulting product still remains thixotropic; the polymer present modifies only certain other properties (e.g. elasticity, strength, swellability, etc.) of the gel to a greater or lesser extent.

Gels with highest quality are obtained when an activated clay mineral is reacted with a water soluble polymer in a relatively thin suspension; otherwise, owing to the quick reaction between the polymer and the clay mineral, the appropriate distribution of the polymer and the most complete reaction of the reactive sites cannot be ensured. Thus the gels with stable structure, capable of taking up and releasing water in a reversible manner, are formed initially in a thin suspension with high water content. The transport of such gels is rather expensive, and these gels should be subjected to a lengthy and energy-intensive drying operation in order to remove or reduce their water content. Although a thick mass of activated clay mineral can also be applied as starting substance in gel formation, the gels formed from such thick masses are generally poorer in quality than those formed from thin suspensions, and specific mixing apparatuses with very high performance are required to react the thick activated clay mineral mass with the polymer. Consequently, the apparatus and energy demands of this operation are high, which renders the procedure less economic.

Therefore, there is a need for an improved method which enables one to avoid the disadvantages mentioned above and to produce gels of high quality in a more economical way than before.

Now it has been found, unexpectedly, that when a clay mineral is reacted in non-activated or partly activated state with a water soluble polymer in an amount required for gel formation, and the resulting clay mineral/polymer complex is activated subsequently, preferably directly before its use, the clay mineral is still able to disintegrate into its elementary lamellae or chains upon the subsequent activation procedure, and the liberated reactive sites of the clay mineral react directly with the polymer present, whereupon a stable gel structure fixed irreversibly by chemical bonds and capable of taking up and releasing water in a reversible manner is formed. This recognition is very surprising, since one had to expect that the polymer present in the clay mineral/polymer complex, bound to the surface of the clay mineral packages by sorption or loose chemical bonds, would completely impede the subsequent activation procedure.

Based on the above, the invention relates to an improved method for the preparation of gels capable of taking up and releasing water in a reversible manner from clay minerals and polymers as set out in the accompanying claims.

The term "clay mineral" as used in the specification and claims covers rocks, mine products and artificial mixtures comprising swellable smectites of three-layer structure and/or swellable chain silicates in an amount of at least 10% by weight. Examples of the clay minerals usable in the method of the invention are montmorillonite, beydellite, hectorite, nontronite, illite, alevardite and palygorskite, whereas an example of the clay mineral-containing rocks is bentonite.

2

The activating agents may be, for example, sodium carbonate, mono-, di- and trisodium phosphates, tripolyphosphate, sodium sulphate, lithium carbonate, lithium phosphates, ammonium carbonate, ammonium phosphates and mixtures thereof.

According to a particularly preferred method an overactivated smectite (i.e. a smectite treated with a surplus amount of activating agent) or such a smectite-containing rock (e.g. overactivated bentonite) is applied as activating agent.

Pre-activated smectites (i.e. smectites pre-treated with a minor amount of activating agent) can also be applied as starting substances in the method of the invention, if such materials are available. However, in order to form a final gel with a stable structure and capable of taking up and releasing water in a reversible manner, it is not necessary to use pre-activated smectites, since even non-activated smectites can react completely with the polymer upon the subsequent activation procedure.

The water soluble polymers capable of reacting with clay minerals are known per se; of these, water soluble polymers containing -COOH, -COO$^-$M$^+$ (M$^+$ is a monovalent cation), -CONH$_2$, -OH and/or -C-O-C- functional groups are to be mentioned. Polymers with modified amido groups (where in the amido group is converted into quaternary ammonium group) can be used as well. Examples of these polymers are polyacrylamide, polymethacrylamide, acrylamide - acrylic acid copolymers, hydrolysed acrylamide - acrylic ester copolymers, vinyl alcohol - acrylic acid copolymers, polyvinyl alcohols, hydrolysed polyvinyl esters, polyethylene oxides, water soluble polysaccharides, etc and mixtures of these homo- and copolymers. Graft copolymers can also be applied; of these, copolymers containing acrylic acid, methacrylic acid, acrylamide and/or methacrylamide side chains grafted onto a polysaccharide chain are to be mentioned.

The molecular weight of the polymers usable in the method of the invention may vary generally between 50,000 and 20,000,000, preferably between 300,000 and 10,000,000. According to our experiences, the greater the molecular weight of the polymer, the smaller amount of polymer is required for the reaction.

It is an essential measure of the method according to the invention that the clay mineral/polymer complex is subsequently activated, i.e. the clay mineral/polymer complex or its suspension is admixed with an activating agent. Any of the activating agents listed above can be applied for this purpose. This operation is performed in the presence of water. It is preferred to form suspensions comprising at least 6% by weight of dry substance. One can proceed in such a way that the clay mineral/polymer complex is suspended in water and the solid activating agent is added to this suspension. According to another method the clay mineral/polymer complex is added to an aqueous solution or suspension of the activating agent. The amount of activating agent to be introduced varies with the type of the starting clay mineral; it is, however, absolutely necessary to use at least 0.5% by weight of an activating agent, calculated on the weight of the starting clay mineral. Upon admixing the clay mineral/polymer complex with the activating agent the smectite packages coated with polymer start to swell, then they disintegrate at least in part into their elementary lamellae packages, whereupon a large number of fresh surface points capable of reacting with the polymer (binding sites) are liberated. The newly liberated binding sites react immediately with the polymer present, whereupon a stabilised gel structure capable of taking up and releasing water in a reversible manner is formed.

A major advantage of the method of the invention is that there is no need for utilizing this suspensions, since the non-activated clay mineral can be treated with the polymer even as a thick mass. Significantly less energy is required to admix a thick mass of a non-activated clay mineral with a polymer than it would be required when applying a thick mass of an activated clay mineral as starting substance. The resulting clay mineral/polymer complexes or the suspensions containing them are stable, they can be stored without any change for a prolonged period of time, and their transport is much less expensive than that of the thin suspensions comprising generally less than 10 % by weight of dry substance. These clay mineral/polymer complexes and the suspensions containing them can be activated very easily directly at the place of use; it is sufficient to apply e.g. a simple concrete mixer for admixing the clay mineral/polymer complex with the activating agent. Some properties of the resulting stabilized gel (e.g. the gelling time) can be varied by varying the nature and amount of the activating agent; thus gels with varying properties adaptable to local requirements can be prepared from one and the same starting substance.

The invention is elucidated in more detail by the aid of the following non-limiting Examples.

Example 1

5 litres of an aqueous suspension with a dry substance content of 40 % by weight were prepared from bentonite originated from Istenmezeje, Hungary (sold by Országos Érc- és Ásványbányák Vállalat, Mád, Hungary). The suspension was divided into five equal parts, and then the polymers (and optionally the activating agents used for preactivation) listed in Table I were admixed with the individual portions in the amounts listed in Table I. The suspensions were stirred for 3 minutes with an Ultraturrax stirrer and then allowed to stand. The individual samples were divided into two equal parts, and the activating agents listed in Table I were admixed with the samples one hour or one month after their preparation, respectively.

Gels with stable structure, capable of taking up and releasing water in a reversible manner, were formed from each of the suspension samples. The formation of stable gel structure is verified by the fact that the resistance of medium of the individual suspension samples rose to 4-10- times the initial value upon admixing them with the activating agent. The properties of the resulting gels did not vary with the storage period of the suspension before admixing it with the activating agent.

Table I

| Sample No. | Preactivating agent | | Polymer | | Activating agent | |
|---|---|---|---|---|---|---|
| | Type | Amount* | Type | Amount* | Type | Amount* |
| 1 | – | – | Polyacrylamide | 5.8 | Sodium carbonate | 2.6 |
| 2 | Trisodium phosphate | 0.4 | Acrylic acid – acrylamide copolymer | 6.5 | 1:1 mixture of sodium carbonate and trisodium phosphate | 2.3 |
| 3 | 1:1 mixture of sodium carbonate and trisodium phosphate | 0.3 | A-100** | 3.4 | Sodium carbonate | 2.2 |
| 4 | Lithium carbonate | 0.5 | A-110*** | 6.8 | Lithium carbonate | 2.2 |
| 5 | Disodium hydrogen phosphate | 0.4 | Robofloc F50**** | 2.5 | Tripolyphosphate | 3.0 |

* % by weight, calculated for the weight of the dry substance

** Hydrolysed polyacrylamide, produced by American Cyanamid Co.

*** Hydrolysed polyacrylamide, produced by American Cyanamid Co.

Example 2

Crude calcium bentonite originating from Bavaria and illite originating from Füzérradvány, Hungary (sold by Országos Érc- és Ásványbányák Vállalat, Mád, Hungary) were admixed in a weight ratio of 1:1, and a suspension with a dry substance content of 35 % by weight was prepared from the mixture. Thereafter 0.5 % by weight of a 1:1 mixture of sodium carbonate and trisodium phosphate, calculated for the weight of the dry substance, was added to the suspension under intense stirring. After 5 minutes of stirring 6.5 % by weight of an acrylamide - acrylic acid copolymer (average molecular weight: 1,500,000), calculated for the dry substance content, were added to the suspension, and stirring was continued for 10 minutes.

The resulting suspension was allowed to stand for one day, thereafter diluted with an equal amount of water under intense stirring, and 3.0 % by weight of sodium carbonate, calculated for the dry substance content, were added to the suspension. The suspension was stirred for 10 minutes in a Labomix kneading-mixing apparatus. A gel with stable structure was formed; the resistance of medium of the suspension rose to 5.5- times the initial value.

Example 3

Freshly mined bentonite originating from Istenmezeje (Hungary) with a dry substance content of 72 % by weight (sold by Országos Érc- és Ásványbányák Vállalat, Mád, Hungary) is admixed with water in a laboratory kneading-mixing apparatus to obtain a mass with a water content of 60 % by weight. The resulting mass is passed through three laboratory roller mills with gradually decreasing slot widths to reduce the particle size of the inert impurities present (e.g. sand) below 0.1 $\mu$m.

500 g of a mass pre-treated as described above are put into a laboratory kneading-mixing apparatus, and 100 g of an aqueous polyacrylamide solution with a dry substance content of 5 % by weight (average molecular weight of the polymer: $3\times10^6$) are added in portions. The mass is kneaded for 2 minutes.

100 g of the resulting paste-like mass are pulled to small pieces, the small pieces are added to 200 g of water in a household mixer, and the mixture is stirred for 2 minutes. Thereafter 3 % by weight of sodium carbonate, calculated for the dry substance content, are introduced. After 2 minutes of stirring a stable gel of excellent quality is formed from the mixture.

Example 4

100 g of a paste-like clay mineral/polymer mass prepared as described in Example 3 are filled into a laboratory mixer, and then 3 % by weight of trisodium phosphate, calculated for the dry substance content, are added to the mass as a concentrated aqueous solution. After 2 minutes of stirring the resistance of medium of the mass rises to eight times the initial value, which indicates gel formation. The resistance of medium of the resulting gel is higher by 70 % than that of a gel prepared otherwise in the same way from the same materials but using an activated clay mineral as starting substance.

Example 5

Freshly mined bentonite originating from Várkenö (Hungary), containing 75 % by weight of dry substance, is comminuted by passing through an edge runner, and then the mass is passed through two laboratory roller mills with gradually decreasing slot widths to adjust the particle size of the solids below 0.1 $\mu$m. Thereafter the bentonite is filled into a clay extruder, water is added to it in an amount to reach a water content of 45 %, and then 20 % by volume of an aqueous hydrolysed polyacrylamide (average molecular weight: $1.5 \times 10^6$, degree of hydrolysis: 5 %) solution with a dry substance content of 2.5 % by weight, calculated for the volume of the bentonite mass, is admixed with the bentonite mass.

The resulting mixture is passed through a cylindrical head 2 mm in diameter, and the extruded material is cut into small cylinders 5 mm in length. The resulting granules are dried in a drum dryer; hot (300°C) flue gas introduced in a countercurrent stream is used as drying agent. The contact period of the flue gas and the granules is adjusted to about 5 minutes; in this way the surface of the granules cannot reach a temperature exceeding 150°C for a prolonged period of time. Hard, brittle grains are obtained with a humidity content of about 10 % by weight.

The dried grains are comminuted in a hammer mill, and the comminuted particles are divided into two fractions by sieving. The course fraction, comprising grains with an average diameter of 0.3-1 mm, is a free-flowing granulate easy to sprinkle. The fine fraction is a fine powder comprising particles with an average diameter less than 0.3 mm.

8 g of a powdery clay mineral/polymer complex obtained as described above are sprinkled into a solution of 0.16 g of sodium carbonate in 92 g of water under steady stirring. The particles of the clay mineral/polymer complex start to swell intensely, and after about 10 minutes of stirring a pappy gel mass is formed. Stirring is stopped and the mixture is allowed to stand. After about 1-2 hours of standing a completely homogeneous gel, capable of taking up and releasing water in a reversible manner, is formed.

**Claims**

1. A method for the preparation of gels capable of taking up and releasing water in a reversible manner from a clay mineral selected from smectites of three-layer structure and/or swellable chain silicates, characterised in that the clay mineral in non-activated state or optionally pre-treated with up to 1.0% by weight (calculated for the weight of the clay mineral) of an activating agent selected from (i) alkali metal or ammonium salts having an anion that forms a water insoluble precipitate with alkaline earth metal ions and (ii) a smectite that has been overactivated with such salts

a) is treated in a suspension containing at least 8% by weight, preferably 10-50% by weight, of dry substance with at least 0.6% by weight, preferably 1.5-15% by weight (calculated for the dry substance content of the suspension) of a water soluble polymer capable of reacting with the clay mineral and having a molecular weight in the range of from 50,000 to 20,000,000, and the resulting suspension of the clay mineral/polymer complex is admixed, preferably directly before use, with at leat 0.5% by weight, preferably 1.0-5.0% by weight (calculated on the clay mineral content) of an activating agent selected from (i) alkali metal or ammonium salts having an anion that forms a water insoluble precipitate with alkaline earth metal ions and (ii) a smectite that has been overactivated with such salts,

b) is treated as a mass with a dry substance content of at least 15% by weight, preferably 60-70% by weight, with at leat 0.6% by weight, preferably 1.5-15% by weight (calculated for the dry substance content of the mass), of a water soluble polymer capable of reacting with the clay mineral and having a molecular weight in the range of from 50,000 to 20,000,000, then,if necessary, the water content is lowered to or below 40% by weight, the resulting mass is optionally granulated, and the resulting clay mineral/polymer complex is admixed, preferably directly before use, with at least 0.5% by weight preferably 1.0-5.0% by weight (calculated for the weight of the clay mineral), of an activating agent selected from (i) alkali metal or ammonium salts having an anion that forms a water insoluble precipitate with alkaline earth metal ions and (ii) a smectite that has been overactivated with such salts; or

c) is treated as a mass with a dry substance content of at least 8.0% by weight, preferably 10-70% by weight, with at leat 0.6% by weight, preferably 1.5-15% by weight, (calculated on the dry substance content of the mass), of a water soluble polymer capable of reacting with the clay mineral and having a molecular weight in the range of from 50,000 to 20,000,000, the resulting clay mineral-polymer complex is dried to a water content of not more than 20% by weight taking care that in the drying operation the surface of the dry substance does not reach a temperature exceeding 150°C for a prolonged period of time, if desired, the resulting clay mineral/polymer complex is pulverised or granulated, and the resulting clay mineral/polymer complex is admixed, preferably directly before use, with at least 0.5% by weight, preferably 1.0-5.0% by weight (calculated on the weight of the clay mineral) of an activating agent, in the presence of water, the activating agent being selected from (i) alkali metal or ammonium salts having an anion that forms a water insoluble precipitate with alkaline earth metal ions and (ii) a smectite that has been overactivated with such salts.

2. A method as claimed in claim 1, characterised in that sodium carbonate, mono-, di or trisodium phosphate, tripolyphosphate, lithium carbonate, a lithium phosphate, sodium sulphate, ammonium carbonate, an ammonium phosphate and/or an overactivated smectite is used as activating agent.

3. A method as claimed in claim 1 or 2, characterised in that the clay mineral/polymer complex is treated with the activating agent as a suspension containing at least 6% by weight of dry substance.

4. A method as claimed in any of claims 1 to 3, characterised in that the clay mineral/polymer complex is suspended in water, and the activating agent is added to the suspension.

5. A method as claimed in any of claims 1 to 3, characterised in that the clay mineral/polymer complex is added to an aqueous solution or suspension of the activating agent.

6. A method as claimed in any one of claims 1 to 5, wherein the clay mineral is in the form of rock, mine products or artificial mixtures containing at least 10% by weight of the said clay mineral.

**7.** A mixture comprising (1) a clay mineral selected from smectites of three layered structure and/or swellable silicates that has been optionally partly activated by up to 1% by weight (calculated on the weight of the clay mineral) of an activating agent selected from (i) alkali metal or ammonium salts having an anion that forms a water insoluble precipitate with alkaline earth metal ions and (ii) a smectite that has been overactivated with such salts and (2) at least 0.6% by weight, and preferably 1.5 to 15% by weight (calculated on the weight of the clay mineral) of a water-soluble polymer capable of reacting with the clay mineral and having a molecular weight in the range of from 50,000 to 20,000,000, which mixture is capable of forming a gel that can absorb and release water upon addition of 1 to 5% by weight (based on the weight of the clay mineral) of an activating agent selected from (i) alkali metal or ammonium salts having an anion that forms a water insoluble precipitate with alkaline earth metal ions and (ii) a smectite that has been overactivated with such salts.

**8.** A mixture as claimed in claim 6, having a water content of less than 40% by weight and preferably less than 20% by weight.

**9.** A mixture as claimed in claim 7 or claim 8, wherein the clay mineral is in the form of rocks, mine products or artificial mixtures containing at least 10% by weight of the said clay mineral.

**Patentansprüche**

**1.** Verfahren zur Herstellung von Gelen, die auf reversible Weise Wasser aus einem aus Smektiten mit Dreischichtenstruktur und/oder quellbaren Kettensilikaten ausgewählten Tonmineral aufnehmen und freisetzen können, dadurch gekennzeichnet, daß das Tonmineral in nicht-aktiviertem Zustand oder wahlweise vorbehandelt mit bis zu 1,0 Gew.-% (berechnet auf das Gewicht des Tonminerals ) an aktivierendem Mittel, ausgewählt aus (i) Alkalimetall- und Ammoniumsalzen mit einem Anion, das einen wasserunlöslichen Niederschlag mit Erdalkalimetallionen bildet, und (ii) einem Smektit, der mit solchen Salzen überaktiviert wurde,

a) in einer Suspension, die wenigstens 8 Gew.-%, vorzugsweise 10-50 Gew.-%, an Trockensubstanz enthält, mit wenigstens 0,6 Gew.-%, vorzugsweise 1,5-15 Gew.-%, (berechnet für Trockensubstanzgehalt der Suspension) eines wasserlöslichen Polymeren, das zur Reaktion mit dem Tonmineral in der Lage ist und ein Molekulargewicht in dem Bereich von 50.000 bis 20.000.000 hat, behandelt wird, und die erhaltene Suspension des Tonmineral/Polymerkomplexes, vorzugsweise direkt vor der Anwendung, mit wenigstens 0,5 Gew.-%, vorzugsweise 1,0-5,0 Gew.-%, (berechnet auf den Tonmineralgehalt) eines aktivierenden Mittels, ausgewählt aus (i) Alkalimetall- oder Ammoniumsalzen mit einem Anion, das einen wasserunlöslichen Niederschlag mit Erdalkalimetallionen bildet, und (ii) einem Smektit, der mit solchen Salzen überaktiviert wurde, zusammengemischt wird,

b) als eine Masse mit einem Trockensubstanzgehalt von wenigstens 15 Gew.-%, vorzugsweise 60-70 Gew.-%, mit wenigstens 0,6 Gew.-%, vorzugsweise 1,5-15 Gew.-%, (berechnet für Trockensubstanzgehalt der Masse) eines wasserlöslichen Polymeren, das zu Reaktion mit dem Tonmineral in der Lage ist und ein Molekulargewicht in dem Bereich von 50.000 bis 20.000.000 hat, behandelt wird, dann, falls erforderlich, der Wassergehalt auf oder unter 40 Gew.-% erniedrigt wird, die erhaltene Mase wahlweise granuliert wird, und der erhaltene Tonmineral/Polymerkomplex, vorzugsweise direkt vor der Anwendung, mit wenigstens 0,5 Gew.-%, vorzugsweise 1,0-5,0 Gew.-%, (berechnet für das Gewicht des Tonminerals) eines aktivierenden Mittels, ausgewählt aus (i) Alkalimetall- oder Ammoniumsalzen mit einem Anion, das einen wasserunlöslichen Niederschlag mit Erdalkalimetallionen bildet, und (ii) einem Smektit, der mit solchen Salzen überaktiviert wurde, zusammengemischt wird; oder

c) als eine Masse mit einem Trockensubstanzgehalt von wenigstens 8,0 Gew.-%, vorzugsweise 10-70 Gew.-%, mit wenigstens 0,6 Gew.-%, vorzugsweise 1,5-15 Gew.-%, (berechnet auf Trockensubstanzgehalt der Masse) eines wasserlöslichen Polymeren, das zu Reaktion mit dem Tonmineral in der Lage ist und ein Molekulargewicht in dem Bereich von 50.000 bis 20.000.000 hat, behandelt wird, der erhaltene Tonmineral/Polymerkomplex auf einen Wassergehalt von nicht mehr als 20 Gew.-%, wobei dafür Sorge getragen wird, daß beim Trocknungsvorgang die Oberfläche der Trockensubstanz eine 150° C übersteigende Temperatur für eine längere Zeitspanne nicht erreicht, getrocknet wird, falls gewünscht, der erhaltene Tonmineral/Polymerkomplex pulverisiert oder granuliert wird, und der erhaltene Tonmineral/Polymerkomplex, vorzugweise direkt vor der Anwendung, mit wenigstens 0,5 Gew.-%, vorzugsweise 1,0-5,0 Gew.-%, (berechnet auf das Gewicht des Tonminerals) eines aktivierenden Mittels, in Anwesenheit von Wasser, zusammengemischt wird, wobei das aktivierende Mittel aus (i) Alkalimetall- oder Ammoniumsalzen mit einem Anion, das einen wasserunlöslichen Niederschlag mit Erdalkalimetallionen bildet, und (ii) einem Smektit, der mit solchen Salzen überaktiviert wurde, ausgewählt wird.

2. Verfahren nach Anspruch 1, dadurch gekennzeichnet, daß Natriumkarbonat, Mono-, Di- oder Trinatriumphosphat, Tripolyphosphat, Lithiumkarbonat, ein Lithiumphosphat, Natriumsulfat, Ammoniumkarbonat, ein Ammoniumphosphat und/oder ein überaktivierter Smektit als aktivierendes Mittels eingesetzt wird.

3. Verfahren nach Anspruch 1 oder 2, dadurch gekennzeichnet, daß der Tonmineral/Polymerkomplex mit dem aktivierenden Mittel als eine Suspension, die wenigstens 6 Gew.-% Trockensubstanz enthält, behandelt wird.

4. Verfahren nach einem der Ansprüche 1 bis 3, dadurch gekennzeichnet, daß der Tonmineral/Polymerkomplex in Wasser suspendiert wird, und daß das aktivierende Mittel zu der Suspension zugesetzt wird.

5. Verfahren nach einem der Ansprüche 1 bis 3, dadurch gekennzeichnet, daß der Tonmineral/Polymerkomplex zu einer wässrigen Lösung oder Suspension des aktivierenden Mittels zugesetzt wird.

6. Verfahren nach einem der Ansprüche 1 bis 5, dadurch gekennzeichnet, daß das Tonmineral in Form von Gestein, Minenprodukten oder künstlichen Mischungen, die wenigstens 10 Gew.-% dieses Tonminerals enthalten, eingesetzt wird.

7. Mischung, umfassend (1) ein aus Smektiten mit Dreischichtenstruktur und/oder quellbaren Silikaten ausgewähltes Tonmineral, das wahlweise mit bis zu 1 Gew.-% (berechnet auf das Gewicht des Tonminerals) eines aktivierenden Mittels, ausgewählt aus (i) Alkalimetall- oder Ammoniumsalzen mit einem Anion, das einen wasserunlöslichen Niederschlag mit Erdalkalimetallionen bildet, und (ii) einem Smektit, der mit solchen Salzen überaktiviert wurde, partiell aktiviert wurde, und (2) wenigstens 0,6 Gew.-% und vorzugsweise 1,5 bis 15 Gew.-% (berechnet auf das Gewicht des Tonminerals) eines wasserlöslichen Polymeren, das zur Reaktion mit dem Tonmineral in der Lage ist und ein Molekulargewicht in dem Bereich von 50.000 bis 20.000.000 hat, wobei die Mischung zur Bildung eines Geles in der Lage ist, das bei Zugabe von 1 bis 5 Gew.-% (bezogen auf das Gewicht des Tonminerals) eines aktivierenden Mittels, ausgewählt aus (i) Alkalimetall- oder Ammoniumsalzen mit einem Anion, das einen wasserunlöslichen Niederschlag mit Erdalkalimetallionen bildet, und (ii) einem Smektit, der mit solchen Salzen überaktiviert wurde, Wasser absorbieren und freisetzen kann.

8. Mischung nach Anspruch 6, die einen Wassergehalt von weniger als 40 Gew.-% und vorzugsweise von weniger als 20 Gew.-% aufweist.

9. Mischung nach Anspruch 7 oder 8, worin das Tonmineral in Form von Gestein, Minenprodukten oder künstlichen Mischungen, die wenigstens 10 Gew.-% dieses Tonminerals enthalten, vorliegt.

## Revendications

1. Un procédé pour la préparation de gels capables d'absorber de l'eau de manière réversible, à partir d'argile minérale sélectionnée parmi les smectites ayant une structure en trois feuillets et/ou les silicates à chaînes gonflables, caractérisé en ce que l'argile minérale dans un état non-activé ou éventuellement prétraitée avec jusqu'à 1% en poids (calculé par rapport au poids de l'argile minérale) d'un agent activant sélectionné parmi:
(i) des sels d'ammonium ou de métaux alcalins ayant un anion qui forme un précipité insoluble dans l'eau avec des ions de métaux alcalino-terreux, et
(ii) une smectite qui a été suractivée avec de tels sels;
a) est traitée avec une suspension contenant au moins 8% en poids, de préférence de 10 à 50% en poids, de substance sèche avec au moins 0,6% en poids, de préférence 1,5 à 15% en poids (calculé sur la base de la teneur en substance sèche de la solution), d'un polymère soluble dans l'eau capable de réagir avec l'argile minérale et ayant une masse moléculaire comprise dans l'intervalle allant de 50 000 à 20 millions, et la suspension résultante du complexe argile minérale/polymère est mélangée, de préférence directement avant son utilisation, avec au moins 0,5% en poids, de préférence 1,0 à 5,0% en poids (calculé sur la base de la teneur en argile minérale), d'un agent activant sélectionné parmi:

(i) des sels d'ammonium ou de métaux alcalins ayant un anion qui forme un précipité insoluble dans l'eau avec des ions de métaux alcalino-terreux, et

(ii) une smectite qui a été suractivée avec de tels sels;

b) est traitée sous forme de masse avec une teneur en substance sèche d'au moins 15% en poids, de préférence 60 à 70% en poids, avec au moins 0,6% en poids, de préférence 1,5 à 15% en poids (calculé sur la base de la teneur en substance sèche de la masse), d'un polymère soluble dans l'eau capable de réagir avec l'argile minérale et ayant une masse moléculaire comprise dans l'intervalle allant de 50 000 à 20 millions et, si nécessaire, la teneur en eau est diminuée jusqu'à, ou en-dessous de, 40% en poids; la masse résultante est éventuellement mise sous forme de granules et le complexe argile minérale/polymère résultant est mélangé de préférence directement avant utilisation avec au moins 0,5% en poids, de préférence 1,0 à 5,0% en poids (calculé sur la base du poids de l'argile minérale), d'un agent activant sélectionné parmi:

(i) des sels d'ammonium ou de métaux alcalins ayant un anion qui forme un précipité insoluble dans l'eau avec des ions de métaux alcalino-terreux, et

(ii) une smectite qui a été suractivée avec de tels sels;

ou

c) est traitée sous forme d'une masse avec une teneur en substance sèche d'au moins 8,0% en poids, de préférence 10 à 70% en poids, avec au moins 0,6% en poids, de préférence 1,5 à 15% en poids (calculé sur la base de la teneur en substance sèche de la masse), d'un polymère soluble dans l'eau capable de réagir avec l'argile minérale et ayant une masse moléculaire comprise dans l'intervalle allant de 50 000 à 20 millions, le complexe argile minérale/polymère résultant est séché jusqu'à obtenir une teneur en eau qui n'excède pas 20% en poids, en prenant soin que, durant l'opération de séchage, la surface de la substance sèche n'atteigne pas une température excédant 150°C pendant des périodes de temps prolongées, et si on le désire, le complexe argile minérale/polymère résultant est pulvérisé ou mis sous la forme de granules et le complexe argile minérale/polymère résultant est mélangé de préférence directement avant utilisation avec au moins 0,5% en poids, de préférence 1,0 à 5% en poids, (calculé sur la base du poids de l'argile minérale), d'un agent activant en présence d'eau, l'agent activant étant sélectionné parmi:

(i) des sels d'ammonium ou de métaux alcalins ayant un anion qui forme un précipité insoluble dans l'eau avec un ion de métal alcalino-terreux, et

(ii) une smectite qui a été suractivée avec de tels sels.

2. Un procédé selon la revendication 1, caractérisé en ce que l'agent activant utilisé est choisi parmi le carbonate de sodium, le mono-, di- ou triphosphate de sodium, le tripolyphosphate, le carbonate de lithium, le phosphate de lithium, le phosphate de sodium, le carbonate d'ammonium, le phosphate d'ammonium et/ou une smectite suractivée.

3. Un procédé selon la revendication 1 ou 2, caractérisé en ce que le complexe argile minérale/polymère est traité avec un agent activant sous la forme d'une suspension contenant au moins 6% en poids de substance sèche.

4. Un procédé selon l'une quelconque des revendications 1 à 3, caractérisé en ce que le complexe argile minérale/polymère est en suspension dans l'eau et l'agent activant est ajouté à cette suspension.

5. Un procédé selon l'une quelconque des revendications 1 à 3, caractérisé en ce que le complexe argile minérale/polymère est ajouté à une solution ou suspension aqueuse de l'agent activant.

6. Un procédé selon l'une quelconque des revendications 1 à 5, dans lequel l'argile minérale est sous la forme de roches, de produits provenant de mines ou de mélanges artificiels contenant au moins 10% en poids de ladite argile minérale.

7. Une mélange comprenant:

(1) une argile minérale sélectionnée parmi les smectites ayant une structure à trois feuillets et/ou les silicates gonflables qui ont été éventuellement partiellement activés par jusqu'à 1% en poids (calculé par rapport au poids de l'argile minérale), d'un agent activant sélectionné parmi:

(i) des sels d'ammonium ou de métaux alcalins ayant un anion qui forme un précipité insoluble dans l'eau avec des ions de métaux alcalino-terreux, et

(ii) une smectite qui a été suractivée avec de tels sels; et

(2) au moins 0,6% en poids, de préférence 1,5 à 15% en poids (calculé par rapport au poids de l'argile minérale), d'un polymère soluble dans l'eau capable de réagir avec l'argile minérale et ayant une masse moléculaire comprise dans l'intervalle allant de 50 000 à 20 millions,

lequel mélange est capable de former un gel ou peut absorber de façon réversible de l'eau par addition de 1 à 5% en poids (basé sur le poids de l'argile minérale), d'un agent activant sélectionné parmi:

(i) des sels d'ammonium ou de métaux alcalins ayant un anion qui forme un précipité insoluble dans l'eau avec un ion alcalino-terreux, et

(ii) une smectite qui a été suractivée avec de tels sels.

8. Un mélange selon la revendication 7, ayant une teneur en eau inférieure à 40% en poids, et de préférence inférieure à 20% en poids.

9. Un mélange selon la revendication 7 ou 8, dans lequel l'argile minérale est sous la forme de roches, de produits provenant de mines ou de mélanges artificiels contenant au moins 10% en poids de ladite argile minérale.